(19) **Europäisches Patentamt**
**European Patent Office**
**Office européen des brevets**

(11) **EP 4 019 694 A1**

(12) **EUROPEAN PATENT APPLICATION**

(43) Date of publication:
**29.06.2022   Bulletin 2022/26**

(21) Application number: **21217346.2**

(22) Date of filing: **23.12.2021**

(51) International Patent Classification (IPC):
**D06P 1/38** *(2006.01)*      **D06P 1/46** *(2006.01)*
**D06P 1/48** *(2006.01)*      **D06P 1/50** *(2006.01)*
**D06P 1/52** *(2006.01)*      **D06P 1/649** *(2006.01)*
**D06P 1/651** *(2006.01)*      **D06P 5/00** *(2006.01)*
**B41M 5/00** *(2006.01)*      **C09D 11/54** *(2014.01)*
**D06P 1/673** *(2006.01)*      *D06P 5/30 (2006.01)*

(52) Cooperative Patent Classification (CPC):
**D06P 1/38; B41M 5/0017; C09D 11/54; D06P 1/46;**
**D06P 1/48; D06P 1/50; D06P 1/5228;**
**D06P 1/6491; D06P 1/65118; D06P 1/65131;**
**D06P 1/6735; D06P 5/002;** D06P 5/30

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **25.12.2020   JP 2020216429**

(71) Applicant: **Seiko Epson Corporation**
**Tokyo 160-8801 (JP)**

(72) Inventors:
• **KOZAKA, Nao**
**Suwa-shi, 392-8502 (JP)**
• **MIYAJIMA, Yoshitaka**
**Suwa-shi, 392-8502 (JP)**
• **SONOYAMA, Takuya**
**Suwa-shi, 392-8502 (JP)**

(74) Representative: **Miller Sturt Kenyon**
**9 John Street**
**London WC1N 2ES (GB)**

(54) **TREATMENT SOLUTION COMPOSITION FOR INK JET TEXTILE PRINTING, INK SET, AND RECORDING METHOD**

(57)    A treatment solution composition for ink jet textile printing contains one or more selected from the group consisting of a glycol solvent with a molecular weight of 100 or less and a sugar with a molecular weight of 400 or less, water, and an alkaline agent.

FIGURE

**Description**

The present application is based on, and claims priority from JP Application Serial Number 2020-216429, filed December 25, 2020, the disclosure of which is hereby incorporated by reference herein in its entirety.

BACKGROUND

1. Technical Field

The present disclosure relates to a treatment solution composition for ink jet textile printing, an ink set, and a recording method.

2. Related Art

An ink jet recording method can be used to record a high-resolution image with a relatively simple device and has developed rapidly in various fields. In the meantime, various investigations have been made, for example, on a method for obtaining a higher-quality recorded matter using a reactive dye.

For example, JP-A-2004-162247 discloses an ink jet textile printing method in which at least one of an aqueous pretreatment agent and an aqueous ink jet textile printing ink contains a reduction inhibitor. The ink jet textile printing method is a method in which sufficiently satisfactory color reproducibility can be ensured, in ink jet textile printing that uses a reactive dye-containing ink, without being affected by differences between fixing conditions or differences between storage conditions for fabric treated with a pretreatment agent.

However, in an ink jet dye textile printing method of the related art, a color difference (band unevenness) occurs between passes. This is a problem with enhancing the image quality of a recorded matter to be obtained.

SUMMARY

The present disclosure is a treatment solution composition for ink jet textile printing, the treatment solution composition containing one or more selected from the group consisting of a glycol solvent with a molecular weight of 100 or less and a sugar with a molecular weight of 400 or less, water, and an alkaline agent.

The present disclosure is an ink set including the treatment solution composition and an ink jet ink composition.

Furthermore, the present disclosure is a recording method including a treatment solution application step of applying the treatment solution composition to fabric.

BRIEF DESCRIPTION OF THE DRAWING

FIGURE is a schematic view illustrating an overlap region between passes.

DESCRIPTION OF EXEMPLARY EMBODIMENTS

An embodiment (hereinafter referred to as "this embodiment") of the present disclosure is described below in detail. The present disclosure is not limited to the embodiment. Various modifications can be made without departing from the scope of the present disclosure.

1. Treatment Solution Composition for Ink Jet Textile Printing

A treatment solution composition for ink jet textile printing (hereinafter also simply referred to as the "treatment solution composition") according to this embodiment contains one or more selected from the group consisting of a glycol solvent with a molecular weight of 100 or less and a sugar with a molecular weight of 400 or less, water, and an alkaline agent and may further contain another component as required.

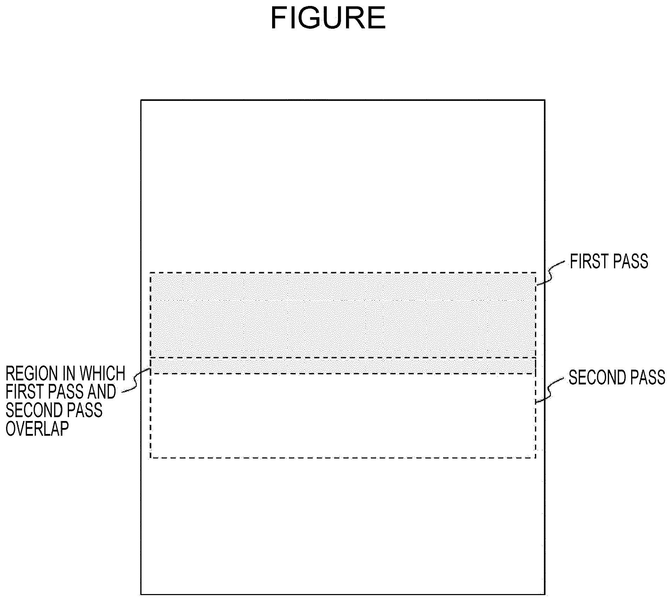

In usual, a serial printer that is a serial recorder performs main scanning (pass) in which an ink composition is discharged with a head moving in a main scanning direction crossing a sub-scanning direction of a recording medium and usually performs recording in two or more passes (multi-pass). In this operation, recording is performed in such a manner that passes overlap slightly as shown in FIG. 1.

However, when recording is performed using a dye textile printing ink, in a region between passes where ink is repeatedly applied, color is likely to be dark, which appears as a color difference (band unevenness) between an overlap region and non-overlap region between passes.

In contrast to this, in the treatment solution composition according to this embodiment, the predetermined glycol solvent or sugar is used, whereby the permeability of an ink composition is controlled and a color difference between an overlap region and non-overlap region between passes can be eliminated.

1.1. Glycol Solvent

The glycol solvent, which has a molecular weight of 100 or less, is not particularly limited. Examples of the glycol solvent include ethylene glycol, propylene glycol, 1,3-propanediol, 1,2-butanediol, 1,3-butanediol, and 1,4-butanediol. The glycol solvent may be used alone or in combination with one or more glycol solvents.

Among these, glycol solvents containing three or four carbon atoms are preferable and propylene glycol, 1,3-propanediol, and 1,3-butanediol are more preferable. Using such glycol solvents further enhances coloring properties of a recorded matter to be obtained and tends to further reduce uneven permeation and bleeding.

The normal boiling point of the glycol solvent is preferably 230 °C or less, more preferably 180 °C to 220 °C, and further more preferably 200 °C to 220 °C. The fact that the normal boiling point of the glycol solvent is within the above range further enhances coloring properties of a recorded matter to be obtained and tends to further reduce uneven permeation and bleeding.

The SP value of the glycol solvent is preferably 13 to 18, more preferably 13.5 to 17, and further more preferably 14 to 16. The fact that the SP value of the glycol solvent is within the above range further enhances coloring properties of a recorded matter to be obtained and tends to further reduce uneven permeation and bleeding.

Herein, the SP value used is a Hansen solubility parameter. The Hansen solubility parameter is one that the solubility parameter introduced by Hildebrand is divided into three components, that is, a dispersion term $\delta d$, a polar term $\delta p$, and a hydrogen bond term $\delta h$, which are expressed in a three-dimensional space. In the present disclosure, the SP value is expressed in $\delta$ $(cal/cm^3)^{0.5}$ and the value calculated using the following equation is used:

$$\delta \, [(cal/cm^3)^{0.5}] = (\delta d^2 + \delta p^2 + \delta h^2)^{0.5}.$$

The content of the glycol solvent, which has a molecular weight of 100 or less, is preferably 0.1% by mass to 30% by mass, more preferably 0.5% by mass to 25% by mass, and further more preferably 1.0% by mass to 20% by mass with respect to the amount of the treatment solution composition. The fact that the content of the glycol solvent, which has a molecular weight of 100 or less, is 0.1% by mass or more further enhances coloring properties of a recorded matter to be obtained and tends to further reduce uneven permeation. The fact that the content of the glycol solvent, which has a molecular weight of 100 or less, is 30% by mass or less further enhances coloring properties of a recorded matter to be obtained and tends to further reduce bleeding.

1.2. Sugar

The sugar, which has a molecular weight of 400 or less, is not particularly limited. Examples of the sugar include monosaccharides such as glucose, fructose, and galactose and disaccharides such as sucrose, maltose, lactose, and trehalose. The sugar may be used alone or in combination with one or more sugars.

Among these, the disaccharides are preferably and trehalose is more preferable. Using the sugar further enhances coloring properties of a recorded matter to be obtained and tends to further reduce uneven permeation and bleeding.

The content of the sugar, which has a molecular weight of 400 or less, is preferably 0.1% by mass to 30% by mass, more preferably 0.5% by mass to 25% by mass, and further more preferably 1.0% by mass to 20% by mass with respect to the amount of the treatment solution composition. The fact that the content of the sugar, which has a molecular weight of 400 or less, is 0.1% by mass or more further enhances coloring properties of a recorded matter to be obtained and tends to further reduce uneven permeation. The fact that the content of the sugar, which has a molecular weight of 400 or less, is 30% by mass or less further enhances coloring properties of a recorded matter to be obtained and tends to further reduce bleeding. 1.3. Alkaline Agent

Using the alkaline agent tends to further enhances mainly the fixability of a reactive dye. The alkaline agent is not particularly limited. Examples of the alkaline agent include sodium hydroxide, potassium hydroxide, sodium hydrogen carbonate, potassium hydrogen carbonate, ammonium hydrogen carbonate, sodium carbonate, potassium carbonate, sodium acetate, potassium acetate, and trisodium phosphate.

The content of the alkaline agent is preferably 0.5% by mass to 10% by mass, more preferably 1.0% by mass to 8.0% by mass, and further more preferably 2.0% by mass to 6.0% by mass with respect to the amount of the treatment solution composition. The fact that the content of the alkaline agent is within the above range further enhances the fixability of an ink composition and coloring properties of a recorded matter to be obtained and tends to further reduce uneven permeation and bleeding.

1.4. Water

The content of water is preferably 45% by mass to 90% by mass, more preferably 50% by mass to 85% by mass, and further more preferably 55% by mass to 80% by mass with respect to the amount of the treatment solution composition.

1.5. Thickening Agent

Using a thickening agent enables the fixability of an ink composition to be further enhanced. The thickening agent is not particularly limited. Examples of the thickening agent include natural gums such as guar gum and locust bean gum; starches; sodium alginate; sea grasses such as Funori; plant skins such as pectic acid; cellulose derivatives such as methylcellulose, ethylcellulose, hydroxyethylcellulose, and carboxymethylcellulose; processed starches such as roasted starch, alpha starch, carboxymethyl starch, carboxyethyl starch, and hydroxyethyl starch; processed natural gums such as Shiraz gum and roast bean gum; algin derivatives; synthetic pastes such as polyvinyl alcohol and polyacrylic esters; and emulsions. The thickening agent may be used alone or in combination with one or more thickening agents.
Among these, sodium alginate, carboxymethylcellulose, and hydroxyethylcellulose are preferable. Using the thickening agent tends to reduce bleeding occurring in a recorded matter to be obtained.
The content of thickening agent is preferably 0.1% by mass to 3.0% by mass, more preferably 0.3% by mass to 2.0% by mass, and further more preferably 0.5% by mass to 1.5% by mass with respect to the amount of the treatment solution composition. The fact that the content of thickening agent is within the above range tends to further reduce bleeding occurring in a recorded matter to be obtained.

1.6. Ureas

Using ureas enables the fixability of an ink composition to be further enhanced. The ureas are not particularly limited. Examples of the ureas include urea, dimethylurea, ethylene urea, tetramethylurea, thiourea, monomethylthiourea, dimethylthiourea, and 1,3-dimethyl-2-imidazolidinone. Among these, urea is preferable. The ureas may be used alone or in combination.
The content of the ureas is preferably 2.5% by mass to 25% by mass, more preferably 5.0% by mass to 20% by mass, and further more preferably 7.5% by mass to 15% by mass with respect to the amount of the treatment solution composition. The fact that the content of the ureas is within the above range tends to further reduce bleeding occurring in a recorded matter to be obtained.

1.7. Reduction Inhibitor

Using a reduction inhibitor enables a bond between fiber and a reactive dye to be inhibited from being broken by reducing action, prevents uneven printing, enhances the reproducibility of printing density and hue, and enables high coloring properties to be obtained.
The reduction inhibitor used is preferably a salt of nitrobenzenesulfonic acid and more preferably an alkali metal salt of nitrobenzenesulfonic acid, particularly a sodium salt of nitrobenzenesulfonic acid.
The content of the reduction inhibitor is preferably 0.5% by mass to 10% by mass, more preferably 1.0% by mass to 7.5% by mass, and further more preferably 2.0% by mass to 5.0% by mass with respect to the amount of the treatment solution composition. The fact that the content of the reduction inhibitor is within the above range tends to further reduce bleeding occurring in a recorded matter to be obtained. 2. Ink Set
An ink set according to this embodiment includes the treatment solution composition for ink jet textile printing and an ink jet ink composition (hereinafter also simply referred to as the "ink composition").

2.1. Ink jet Ink Composition

The ink jet ink composition contains, for example, dye, water, a water-soluble organic solvent, ureas, a nitrogen-containing compound, a surfactant, a pH adjustor, a chelating agent, a preservative, and the like.

2.1.1. Dye

The dye is not particularly limited. Examples of the dye include acidic dyes such as C. I. Acid Yellow, C. I. Acid Red, C. I. Acid Blue, C. I. Acid Orange, C. I. Acid Violet, and C. I. Acid Black; basic dyes such as C. I. Basic Yellow, C. I. Basic Red, C. I. Basic Blue, C. I. Basic Orange, C. I. Basic Violet, and C. I. Basic Black; direct dyes such as C. I. Direct Yellow, C. I. Direct Red, C. I. Direct Blue, C. I. Direct Orange, C. I. Direct Violet, and C. I. Direct Black; reactive dyes such as C. I. Reactive Yellow, C. I. Reactive Red, C. I. Reactive Blue, C. I. Reactive Orange, C. I. Reactive Violet, and C. I. Reactive Black; and disperse dyes such as C. I. Disperse Yellow, C. I. Disperse Red, C. I. Disperse Blue, C. I. Disperse Orange, C. I. Disperse Violet, and C. I. Disperse Black. The above dyes may be used alone or in combination.

Among these, the reactive dyes are preferable. Using a reactive dye further enhances coloring properties of a recorded matter to be obtained when the treatment solution composition for ink jet textile printing is used, and tends to further reduce uneven permeation and bleeding.

The content of the dye is preferably 2.5% by mass to 17.5% by mass, more preferably 5.0% by mass to 15% by mass, and further more preferably 7.5% by mass to 12.5% by mass with respect to the amount of the ink composition.

2.1.2. Water

The content of water is preferably 35% by mass to 60% by mass, more preferably 40% by mass to 55% by mass, and further more preferably 45% by mass to 50% by mass with respect to the amount of the ink composition.

2.1.3. Water-Soluble Organic Solvent

The water-soluble organic solvent is not particularly limited. Examples of the water-soluble organic solvent include glycerin; glycols such as ethylene glycol, diethylene glycol, triethylene glycol, propylene glycol, dipropylene glycol, 1,3-propanediol, 1,2-butanediol, 1,2-pentanediol, 1,2-hexanediol, 1,4-butanediol, 1,5-pentanediol, and 1,6-hexanediol; glycol monoethers such as ethylene glycol monomethyl ether, ethylene glycol monoethyl ether, diethylene glycol monomethyl ether, diethylene glycol monoethyl ether, propylene glycol monomethyl ether, propylene glycol monoethyl ether, dipropylene glycol monomethyl ether, dipropylene glycol monoethyl ether, triethylene glycol monomethyl ether, and triethylene glycol monobutyl ether; and alcohols such as methanol, ethanol, n-propylalcohol, iso-propylalcohol, n-butanol, 2-butanol, tert-butanol, iso-butanol, n-pentanol, 2-pentanol, 3-pentanol, and tert-pentanol. Among these, glycerin, the glycols, and the glycol monoethers are preferable and diethylene glycol, propylene glycol, triethylene glycol monobutyl ether, and glycerin are more preferable. The water-soluble organic solvent may be used alone or in combination with one or more water-soluble organic solvents.

Among these, the glycols are preferable and diethylene glycol, propylene glycol, and 1,2-hexanediol are more preferable. Using the water-soluble organic solvent tends to further enhance the discharge stability.

The content of the water-soluble organic solvent is preferably 5.0% by mass to 35% by mass, more preferably 10% by mass to 30% by mass, and further more preferably 15% by mass to 25% by mass with respect to the amount of the ink composition. The fact that the content of the water-soluble organic solvent is within the above range tends to further enhance the discharge stability.

2.1.4 Ureas

The ureas are not particularly limited. Examples of the ureas include urea, dimethylurea, ethylene urea, tetramethylurea, thiourea, monomethylthiourea, dimethylthiourea, and 1,3-dimethyl-2-imidazolidinone. Among these, urea is preferable. The ureas may be used alone or in combination.

The content of the ureas is preferably 1.0% by mass to 15% by mass, more preferably 1.5% by mass to 10% by mass, and further more preferably 2.5% by mass to 7.5% by mass with respect to the amount of the ink composition. The fact that the content of the ureas is within the above range tends to further reduce bleeding occurring in a recorded matter to be obtained.

2.1.5. Nitrogen-Containing Compound

The nitrogen-containing compound is not particularly limited. Examples of the nitrogen-containing compound include 2-pyrrolidone, N-methyl-2-pyrrolidone, and N-ethyl-2-pyrrolidone.

The content of the nitrogen-containing compound is preferably 2.5% by mass to 17.5% by mass, more preferably 5.0% by mass to 15% by mass, and further more preferably 7.5% by mass to 12.5% by mass with respect to the amount of the ink composition. The fact that the content of the nitrogen-containing compound is within the above range tends to further enhance the discharge stability.

2.1.6. Surfactant

The surfactant is not particularly limited. Examples of the surfactant include an acetylene glycol surfactant, a fluorinated surfactant, and a silicone surfactant.

The acetylene glycol surfactant is not particularly limited and is preferably, for example, one or more selected from the group consisting of 2,4,7,9-tetramethyl-5-decyne-4,7-diol, an alkylene oxide adduct of 2,4,7,9-tetramethyl-5-decyne-4,7-diol, 2,4-dimethyl-5-decyne-4-ol, and an alkylene oxide adduct of 2,4-dimethyl-5-decyne-4-ol.

The fluorinated surfactant is not particularly limited. Examples of the fluorinated surfactant include perfluoroalkylsulfonates, perfluoroalkylcarboxylates, perfluoroalkyl phosphonates, perfluoroalkyl-ethylene oxide adducts, perfluoroalkyl betaines, and perfluoroalkylamine oxide compounds.

Examples of the silicone surfactant include polysiloxane compounds and polyether-modified organosiloxanes.

The content of the surfactant is preferably 0.01% by mass to 1.0% by mass and more preferably 0.05% by mass to 0.5% by mass with respect to the amount of the ink composition. 2.1.7. pH Adjustor

The pH adjustor is not particularly limited. Examples of the pH adjustor include inorganic acids (for example, sulfuric acid, hydrochloric acid, nitric acid, and the like), inorganic bases (for example, lithium hydroxide, sodium hydroxide, potassium hydroxide, ammonia, and the like), organic bases (triethanolamine, diethanolamine, monoethanolamine, and tripropanolamine), and organic acids (for example, adipic acid, citric acid, succinic acid, and the like). The pH adjustor may be used alone or in combination with one or more pH adjustors.

The content of the pH adjustor is preferably 0.1% by mass to 1.5% by mass and more preferably 0.3% by mass to 1.0% by mass with respect to the amount of the ink composition. 2.1.8. Chelating Agent

The chelating agent is not particularly limited. Examples of the chelating agent include ethylenediaminetetraacetates, diedetates, pyrophosphates, hexametaphosphates, citric acid, tartaric acid, and gluconic acid. The chelating agent may be used alone or in combination with one or more chelating agents.

The content of the chelating agent is preferably 0.1% by mass to 3.0% by mass and more preferably 0.5% by mass to 2.0% by mass with respect to the amount of the ink composition. 2.1.9. Preservative

The preservative is not particularly limited. Examples of the preservative include 1,2-benzothiazoline-3-one, 3,4-isothiazoline-3-one, 4,4-dimethyloxazolidine, 5-chloro-2-methyl-4-isothiazoline-3-one, 2-methyl-4-isothiazoline-3-one, 1,2-benzoisothiazolone-3-one, benzotriazole, 2-bromo-2-nitro-1,3-propanediol preservatives, and hexahydro-1,3,5-tris-(2-hydroxyethyl)-S-triazine preservatives. The preservative may be used alone or in combination with one or more preservatives.

The content of the preservative is preferably 0.01% by mass to 1.0% by mass and more preferably 0.05% by mass to 0.5% by mass with respect to the amount of the ink composition.

3. Recording Method

A recording method according to this embodiment includes a treatment solution application step of applying the treatment solution composition to fabric and may include, as required, an ink application step of applying, by an ink jet process, an ink jet ink composition containing a reactive dye to a region of the fabric that is coated with the treatment solution composition.

3.1. Treatment Solution Application Step

The treatment solution application step is a step of applying the treatment solution to fabric. An application method is not particularly limited and is, for example, a method in which the treatment solution composition is applied by an ink jet process or a dipping process. Herein, the term "ink jet process" refers to a process for applying the treatment solution composition to fabric by discharging the treatment solution composition from an ink jet head and the term "dipping process" refers to a process for applying the treatment solution composition to fabric by dipping the fabric in the treatment solution composition.

3.2. Drying Step

The recording method according to this embodiment may further include a drying step of volatilizing at least part of the treatment solution composition applied to the fabric. Drying may be performed using a heater or may be air drying. The drying temperature is preferably 50 °C to 150 °C, more preferably 80 °C to 130 °C, and further more preferably 100 °C to 120 °C. The drying time is preferably 0.5 minutes to five minutes, more preferably 0.5 minutes to three minutes, and further more preferably 0.5 minutes to 1.5 minutes.

3.3. Ink Application Step

The ink application step is a step of applying, by the ink jet process, the ink jet ink composition, which contains the reactive dye, to the region of the fabric that is coated with the treatment solution composition. Herein, an ink jet head used in the ink jet process is a head that discharges the ink composition toward a recording medium to perform recording. The head includes a cavity that discharges the stored ink composition from a nozzle, a discharge drive section that applies discharge driving force to the ink composition, and a nozzle that discharges the ink composition outside the head. The discharge drive section can be formed using an electromechanical conversion element such as a piezoelectric element that varies the volume of a cavity by mechanical deformation, an electrothermal conversion element that generates bubbles in ink by generating heat to discharge the ink, or the like.

3.4. Recording Medium

The recording medium is not particularly limited and is, for example, fabric made of natural fiber such as silk, cotton, or wool; synthetic fiber such as nylon or polyester; or semisynthetic fiber such as rayon.

Examples

The present disclosure is further described below in detail with reference to examples and comparative examples. The present disclosure is not in any way limited to the examples.

1. Preparation Example of Ink Composition

Materials were mixed so as to give a composition shown in Table 1 below, followed by sufficient stirring, whereby an ink composition was obtained. In particular, the materials were uniformly mixed and insoluble matter was removed using a filter, whereby the ink composition was prepared. In Table 1, the unit of values is mass percent and the total is 100.0% by mass.

Table 1

| Dye | Reactive Yellow 2 | 10 |
|---|---|---|
| Nitrogen-containing compound | 2-Pyrrolidone | 10 |
| Surfactant | Olfine PD002W | 0.1 |
| Water-soluble organic solvent | 1,2-Hexanediol | 3.0 |
| | Diethylene glycol | 8.0 |
| | Propylene glycol | 9.3 |
| Other additives | Urea | 5.0 |
| | Triethanolamine | 0.5 |
| | Ethylenediaminetetraacetic acid (2% aq.) | 1.0 |
| | Proxel XL-2 | 0.2 |
| Water | Pure water | Balance |
| Total (mass percent) | | 100 |
| Olfine PD002W (acetylene glycol surfactant, produced by Nissin Chemical Industry Co., Ltd.)<br>Proxel XL-2 (benzothiazoline-3-one, produced by Lonza Japan Ltd.) | | |

2. Preparation Examples of Treatment Solution Compositions

Materials were mixed so as to give compositions shown in Tables 2 and 3 below, followed by sufficient stirring, whereby each treatment solution composition was obtained. In particular, the materials were uniformly mixed and insoluble matter was removed using a filter, whereby the treatment solution composition was prepared. In Tables 2 and 3, the unit of values is mass percent and the total is 100.0% by mass.

2. Evaluation

2.1. Coloring Properties

The treatment solution composition was applied to a cotton fabric using a padder and the cotton fabric was dried by heating at 100 °C for one minute using a drying oven (conveyor oven). The pickup ratio after drying was 10%.

A cartridge of an ink jet printer, PM-870C (manufactured by Seiko Epson Corporation), was filled with the above ink composition. After filling, a nozzle check pattern was printed, whereby it was confirmed that there was no filling failure or nozzle clogging. A solid pattern was printed on the fabric (cotton) coated with the pretreatment solution by an ink jet process such that the ink composition was applied to the fabric by the ink jet process. In particular, an image was formed in such a manner that the ink composition was applied to the fabric under conditions including a resolution of 300 dpi × 600 dpi and an ink ejection amount of 3.5 mg/inch$^2$.

For a recorded matter obtained as described above, the OD value of the solid portion was measured using a Gretag densitometer (manufactured by Gretag Macbeth) and coloring properties thereof were evaluated in accordance with evaluation criteria below.

Evaluation criteria

A: An OD value of 2.6 or more
B: An OD value of 2.4 to less than 2.6
C: An OD value of less than 2.4

2.2. Uneven Permeation (Color Difference between Passes)

The OD value of each of an overlap region and non-overlap region between passes in the solid pattern formed as described above was measured and whether a color difference due to uneven permeation was present in the overlap region between the passes was checked, followed by evaluation in accordance with evaluation criteria below. FIG. 1 is a schematic view illustrating the overlap region between the passes.

Evaluation criteria

AA: The color difference ($\Delta$E) between an overlap region and non-overlap region between passes is less than 0.4.
A: The color difference ($\Delta$E) between an overlap region and non-overlap region between passes is 0.4 to less than 0.6.
B: The color difference ($\Delta$E) between an overlap region and non-overlap region between passes is 0.6 to less than 1.0.
C: The color difference ($\Delta$E) between an overlap region and non-overlap region between passes is 1.0 or more.

2.3. Bleeding

Bleeding of a boundary section at an end of the solid pattern formed as described above was visually checked and was evaluated in accordance with evaluation criteria below.

Evaluation criteria

A: No bleeding is observed.
B: Slight bleeding is observed.
C: Bleeding is observed.

Table 2

| | | Molecular weight | Boiling point | SP value | Example | | | | | | | | | |
|---|---|---|---|---|---|---|---|---|---|---|---|---|---|---|
| | | | | | 1 | 2 | 3 | 4 | 5 | 6 | 7 | 8 | 9 | 10 |
| Glycol solvent | Propylene glycol | 76.09 | 187.4 | 14.2 | 0.8 | 1.0 | 10.0 | 20.0 | 23.0 | - | - | - | - | - |
| | 1,3-Propanediol | 76.09 | 213 | 15.5 | - | - | - | - | - | 1.0 | 10.0 | - | - | - |
| | 1,3-Butanediol | 90.1 | 207.5 | 13.6 | - | - | - | - | - | - | - | 1.0 | 10.0 | - |
| | Diethylene glycol | 106.12 | 245 | 13.7 | - | - | - | - | - | - | - | - | - | - |
| Saccharide | Trehalose | 378 | | | - | - | - | - | - | - | - | - | - | 0.8 |
| | Stachyose | 667 | | | - | - | - | - | - | - | - | - | - | - |
| Thickening agent | Carboxymethylcellulose | | | | - | - | - | - | - | - | - | - | - | - |
| Additive | Urea | | | | 11.0 | 11.0 | 11.0 | 11.0 | 11.0 | 11.0 | 11.0 | 11.0 | 11.0 | 11.0 |
| Reduction inhibitor | Sodium nitrobenzenesulfonate | | | | 3.0 | 3.0 | 3.0 | 3.0 | 3.0 | 3.0 | 3.0 | 3.0 | 3.0 | 3.0 |
| Alkaline agent | Sodium hydrogen carbonate | | | | 4.0 | 4.0 | 4.0 | 4.0 | 4.0 | 4.0 | 4.0 | 4.0 | 4.0 | 4.0 |
| Water | Ion-exchanged water | | | | Balance | Balance | Balance | Balance | Balance | Balance | Balance | Balance | Balance | Balance |
| Total (mass percent) | | | | | 100 | 100 | 100 | 100 | 100 | 100 | 100 | 100 | 100 | 100 |
| Evaluation | Coloring properties | | | | C | B | B | B | C | B | B | A | A | C |
| | Uneven permeation (color difference between passes) | | | | B | AA | AA | AA | A | A | AA | AA | AA | B |
| | Bleeding | | | | B | A | B | B | C | A | B | B | C | B |

Table 3

| | | Molecular weight | Boiling point | SP value | Example | | | | | | | Comparative Example | | | |
|---|---|---|---|---|---|---|---|---|---|---|---|---|---|---|---|
| | | | | | 11 | 12 | 13 | 14 | 15 | 16 | 17 | 1 | 2 | 3 | 4 |
| Glycol solvent | Propylene glycol | 76.09 | 187.4 | 14.2 | - | - | - | - | 10.0 | 10.0 | 10.0 | - | - | - | - |
| | 1,3-Propanediol | 76.09 | 213 | 15.5 | - | - | - | - | - | - | - | - | - | - | - |
| | 1,3-Butanediol | 90.1 | 207.5 | 13.6 | - | - | - | - | - | - | - | - | - | - | - |
| | Diethylene glycol | 106.12 | 245 | 13.7 | - | - | - | - | - | - | - | 1.0 | 10.0 | - | - |
| Saccharide | Trehalose | 378 | | | 1.0 | 10.0 | 20.0 | 23.0 | - | - | - | - | - | - | - |
| | Stachyose | 667 | | | - | - | - | - | - | - | - | - | - | 1.0 | - |
| Thickening agent | Carboxymethylcellulose | | | | - | - | - | - | - | 1.0 | 3.0 | - | - | - | - |
| Additive | Urea | | | | 11.0 | 11.0 | 11.0 | 11.0 | 16.0 | 11.0 | 11.0 | 11.0 | 11.0 | 11.0 | 11.0 |
| Reduction inhibitor | Sodium nitrobenzenesulfonate | | | | 3.0 | 3.0 | 3.0 | 3.0 | 3.0 | 3.0 | 3.0 | 3.0 | 3.0 | 3.0 | 3.0 |
| Alkaline agent | Sodium hydrogen carbonate | | | | 4.0 | 4.0 | 4.0 | 4.0 | 4.0 | 4.0 | 4.0 | 4.0 | 4.0 | 4.0 | 4.0 |
| Water | Ion-exchanged water | | | | Balance | Balance | Balance | Balance | Balance | Balance | Balance | Balance | Balance | Balance | Balance |
| Total (mass percent) | | | | | 100 | 100 | 100 | 100 | 100 | 100 | 100 | 100 | 100 | 100 | 100 |
| Evaluation | Coloring properties | | | | B | B | B | C | C | B | B | B | B | C | C |
| | Uneven permeation (color difference between passes) | | | | AA | AA | AA | A | A | AA | B | C | C | C | C |
| | Bleeding | | | | A | B | B | C | C | A | A | B | C | C | C |

EP 4 019 694 A1

3. Evaluation Results

Evaluation results of the examples and the comparative examples were shown in Tables 2 and 3. As is clear from Tables 2 and 3, using a treatment solution composition, containing a predetermined glycol solvent or sugar, for textile printing allows a recorded matter with a reduced color difference between passes to be obtained.


**Claims**

1.  A treatment solution composition for ink jet textile printing, containing:

    one or more selected from the group consisting of a glycol solvent with a molecular weight of 100 or less and a sugar with a molecular weight of 400 or less;
    water; and
    an alkaline agent.

2.  The treatment solution composition for ink jet textile printing according to claim 1, wherein a content of the glycol solvent is 1.0% by mass to 20% by mass with respect to an amount of the treatment solution composition.

3.  The treatment solution composition for ink jet textile printing according to claim 1, wherein a content of the sugar is 1.0% by mass to 20% by mass with respect to an amount of the treatment solution composition.

4.  The treatment solution composition for ink jet textile printing according to claim 1, wherein a normal boiling point of the glycol solvent is 230 °C or less.

5.  The treatment solution composition for ink jet textile printing according to claim 1, further containing ureas, wherein a content of the ureas is 15% by mass or less with respect to an amount of the treatment solution composition.

6.  The treatment solution composition for ink jet textile printing according to claim 1, further containing a thickening agent, wherein a content of the thickening agent is 2.0% by mass or less with respect to an amount of the treatment solution composition.

7.  An ink set comprising:

    the treatment solution composition for ink jet textile printing according to claim 1; and
    an ink jet ink composition.

8.  The ink set according to claim 7, wherein the ink jet ink composition contains a reactive dye.

9.  A recording method comprising a treatment solution application step of applying the treatment solution composition for ink jet textile printing according to claim 1 to a fabric.

10. The recording method according to claim 9, wherein in the treatment solution application step, the treatment solution composition is applied by an ink jet process or a dipping process.

11. The recording method according to claim 9, further comprising a drying step of volatilizing at least part of the treatment solution composition applied to the fabric.

12. The recording method according to claim 9, further comprising an ink application step of applying, by an ink jet process, an ink jet ink composition containing a reactive dye to a region of the fabric coated with the treatment solution composition.

# FIGURE

FIRST PASS

SECOND PASS

REGION IN WHICH FIRST PASS AND SECOND PASS OVERLAP

Europäisches
Patentamt

European
Patent Office

Office européen
des brevets

# EUROPEAN SEARCH REPORT

**Application Number**

EP 21 21 7346

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/154101 A1 (KONICA MINOLTA IJ TECHNOLOGIES [JP]; KUDO KEI [JP] ET AL.) 23 December 2009 (2009-12-23) * paragraph [0188] – paragraph [0204]; examples Cl-1 to CL-24; tables 1-3 * | 1,2,4, 7-10,12 | INV. D06P1/38 D06P1/46 D06P1/48 D06P1/50 D06P1/52 D06P1/649 D06P1/651 D06P5/00 B41M5/00 C09D11/54 D06P1/673 |
| X | CN 111 350 088 A (UNIV TIANJIN POLYTECHNIC) 30 June 2020 (2020-06-30) * paragraphs [0002], [0009]; examples 1-4 * | 1,2,4-12 | |
| X | WO 2011/078068 A1 (KONICA MINOLTA IJ TECHNOLOGIES [JP]; WATANABE SHINYA [JP] ET AL.) 30 June 2011 (2011-06-30) * examples 55-70, 181-183; tables 17, 37 * | 1-5, 7-10,12 | ADD. D06P5/30 |
| X | CN 106 087 479 A (DEQING COUNTY XINXINDA SILK DYEING CO LTD) 9 November 2016 (2016-11-09) * paragraphs [0002], [0009]; examples embodiments 1-5 * | 1,3,6-9, 11,12 | |
| | | | TECHNICAL FIELDS SEARCHED (IPC) |
| X | CN 105 019 276 A (HUZHOU GAOGE TEXTILE CO LTD) 4 November 2015 (2015-11-04) * paragraphs [0002], [0009]; examples embodiments 1-4 * | 1,3,5-9, 11,12 | D06P B41M C09D |

The present search report has been drawn up for all claims

| Place of search | Date of completion of the search | Examiner |
|---|---|---|
| The Hague | 17 May 2022 | Menard, Claire |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## EP 4 019 694 A1

### ANNEX TO THE EUROPEAN SEARCH REPORT
### ON EUROPEAN PATENT APPLICATION NO.

EP 21 21 7346

17-05-2022

| Patent document cited in search report | | Publication date | Patent family member(s) | Publication date |
|---|---|---|---|---|
| WO 2009154101 | A1 | 23-12-2009 | NONE | |
| CN 111350088 | A | 30-06-2020 | NONE | |
| WO 2011078068 | A1 | 30-06-2011 | NONE | |
| CN 106087479 | A | 09-11-2016 | NONE | |
| CN 105019276 | A | 04-11-2015 | NONE | |

EPO FORM P0459

**EP 4 019 694 A1**

**Patent documents cited in the description**

- JP 2020216429 A
- JP 2004162247 A